Europäisches Patentamt

European Patent Office

Office européen des brevets

(19)

(11) **EP 1 369 853 A2**

(12) **EUROPEAN PATENT APPLICATION**

(43) Date of publication:
**10.12.2003 Bulletin 2003/50**

(51) Int Cl.⁷: **G11B 7/09**

(21) Application number: **03253435.6**

(22) Date of filing: **31.05.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **05.06.2002 KR 2002031491**<br><br>(71) Applicant: **SAMSUNG ELECTRONICS CO., LTD.**<br>**Suwon-City, Kyungki-do (KR)**<br><br>(72) Inventors:<br>  • **Kim, Tae-kyung**<br>    **Youngdeungpo-gu, Seoul (KR)** | • **Chung, Chong-sam**<br>  **Taean-eup, Hwaseong-gun, Gyeonggi-Do (KR)**<br>• **Ahn, Young-man**<br>  **Gwonseon-gu, Suwon-si, Gyeonggi-do (KR)**<br>• **Ma, Byung-in**<br>  **Jangan-gu, Suwon-si, Gyeonggi-do (KR)**<br>• **Kim, Jong-bae**<br>  **Seoul (KR)**<br>• **Kim, Seok-jung**<br>  **Paldal-gu, Suwon-si, Gyeonggi-do (KR)**<br><br>(74) Representative: **Robinson, Ian Michael et al**<br>  **Appleyard Lees,**<br>  **15 Clare Road**<br>  **Halifax HX1 2HY (GB)** |

(54) **Compatible optical pickup**

(57)  A compatible optical pickup compatibly adopting a high density recording medium and at least one low density recording medium, comprises an objective lens capable (3) of forming a light spot suitable for recording and/or reproduction on a recording surface of the high density recording medium (1a) by focusing an incident light beam for the high density recording medium capable of obtaining a high NA suitable for the high density recording medium and a light spot suitable for recording and/or reproduction on a recording surface of the low density recording medium (1b,1c) by focusing an incident light beam for the low density recording medium in the form of a divergent beam, and an actuator provided to apply tilt to the objective lens (3). The light beam for the low density recording medium (1b,1c) is incident on the objective lens in the form of a divergent beam, and when the objective lens is shifted in a radial direction with respect to the low density recording medium, a tilt is applied to the objective lens corresponding to the shift. Thus, the compatible optical pickup can compatibly adopt a high density optical disk and a low density optical disc having different thicknesses. Also, a superior aberration characteristic can be obtained when the object lens is shifted in the radial direction of the optical disc without additional optical parts with respect to the low density optical disc.

FIG. 1

**Description**

The present invention relates to a compatible optical pickup, and more particularly, to a compatible optical pickup which can correct spherical aberration generated due to the difference in thickness between recording media by using a divergent light beam with respect to a recording medium having a thickness deviated from optimal design conditions of an objective lens.

In general, an optical recording and/or reproducing apparatus records information on or reproduces information from an optical disc by using a light spot focused by an objective lens. In the optical recording and/or reproducing apparatus, recording capacity is determined by the size of a light spot. The size S of a light spot is proportional to the wavelength $\lambda$ of a light beam and inversely proportional to the numeric aperture (NA) of the objective lens, as shown in Mathematical Formula 1.

[Mathematical Formula 1]

$$S \propto \lambda/NA$$

Thus, to reduce the size of a light spot formed on an optical disc for the high densification of an optical disc, it is necessary to adopt a short wavelength light source such as a blue-violet laser and an objective lens having an NA of 0.6 or more.

Also, when the inclination angle, refractive index, and thickness of an optical disc is $\theta$, n, and d, respectively, and the NA of an objective lens is NA, coma aberration $W_{31}$ generated by the inclination of the optical disc can be expressed in Mathematic Formula 2.

[Mathematic Formula 2]

$$W_{31} = -\frac{d}{2} \frac{n^2(n^2 - 1)\sin\theta\cos\theta}{(n^2 - \sin^2\theta)^{5/2}} NA^3$$

Here, the refractive index and thickness of the optical disc indicate the refractive index and thickness of an optical medium from a light incident surface to a recording surface, respectively.

In consideration of Mathematical Formula 2, to secure allowance with respect to the inclination of the optical disc, according as the NA of the objective lens is increased for the high densification, the thickness of the optical disc needs to be reduced. The thickness of the optical disc has reduced from 1.2 mm in a CD to 0.6 mm in a DVD. In the future, the thickness will probably be reduced to 0.1 mm in a next generation DVD, a so-called. HD-DVD (high definition digital versatile disc) whose density is higher than the DVD. Of course, the NA of the objective lens has increased from 0.45 in the CD to 0.6 in the DVD. In the next generation DVD, the NA of the objective lens will probably be more than 0.6, for example, 0.85. Also, considering the recording capacity, it is highly likely to adopt a blue-violet light source for the next generation DVD. Here, the compatibility with the existing optical discs is mattered in the development of optical discs having new specifications.

For example, since the reflectivity of a DVD-R or a CD-R which can record once among the existing optical discs is sharply reduced according to a wavelength, it is necessary to use light sources having a wavelength of 650 nm and 780 nm. Thus, considering compatibility with the DVD-R and/or CD-R, an optical pickup for the next generation DVD needs to adopt two or three light sources having different wavelengths.

In the case of a compatible optical pickup adopting a plurality of light sources having different wavelengths, it is preferable to adopt a single objective lens considering a variety of merits such as the size, easiness in assembly, and cost of an apparatus.

When optical discs having different thicknesses are compatibly recorded and/or reproduced with a single objective lens, spherical aberration is generated due to the difference in thickness between the optical discs. Thus, the compatible optical pickup should correct the spherical aberration so that optical discs having different thicknesses can be recorded and/or reproduced by using a single objective lens only.

In Korean Patent Application No. 1997-42819 and a corresponding Korean Patent Publication No. 1999-19439, the present applicant has suggested a CD and DVD compatible optical pickup having an optical arrangement in which an objective lens is optimally designed with respect to a DVD so that a first light beam having a wavelength of 650 nm for a DVD is incident on the objective lens as a parallel beam while a second light beam having a wavelength of 780 nm for a CD having a thickness of a substrate out of a range of design conditions of the objective lens as a divergent beam.

In the case of the above published patent suggested by the present applicant, in which a divergent beam is used, spherical aberration due to the difference in thickness of a substrate between a DVD and a CD can be corrected when the CD is adopted.

However, when the divergent beam is used as in the above, during reproduction of an eccentric optical disc, coma aberration is greatly generated when the objective lens is shifted in a radial direction of the optical disc, so that a tracking error signal and a reproduction signal are further deteriorated.

In the configuration of a compatible optical pickup capable of compatibly adopting a next generation DVD and an optical disc having a density lower than the next generation DVD, that is, a CD and/or DVD, when the objective lens is designed to be suitable for the next generation DVD having the highest density and a divergent beam is used for the CD and/or DVD, spherical aberration can be corrected and working distance can be secured.

However, when a divergent beam is used in an optical pickup for a next generation DVD family optical disc (hereinafter, referred to as the next generation DVD) as a method to compatibly adopt the existing DVD family optical disc (hereinafter, referred to as the DVD) and CD family optical disc (hereinafter, referred to as the CD), although the spherical aberration due to the wavelength and the difference in thickness of the optical discs can be corrected, optical path difference (OPD) due to the shift of the objective lens in a radial direction of the optical disc generated when an eccentric optical disc is adopted, in particular, coma aberration is generated greatly so that a tracking error signal and a reproduction signal is further deteriorated.

That is, a high level of technology is required to design and manufacture an objective lens capable of adopting a next generation DVD, a DVD, and/or a CD, for example, having a high NA of 0.85, as a single lens. Also, it is difficult to make long working distance to be the same as that of an objective lens for a DVD that is designed optimal to the DVD.

According to a well-know technology in the field to which the present invention pertains, the objective lens is typically designed to have a working distance of about 0.6 mm with respect to a blue-violet light source and a thickness of 0.1 mm. When light spots are formed on the recording surfaces of a DVD and a CD by focusing a light beam having a 650 nm wavelength for the DVD and a light beam having a 780 nm wavelength for the CD using the objective lens having a high NA designed to the thickness of 0.1 mm and the blue-violet light beam, the working distances are 0.32 mm and -0.03 mm, respectively. That is, the CD and the objective lens collide with each other.

However, if the light source for a CD for emitting a light beam having a 780 nm wavelength is arranged at a position deviated from a position of the focal point of a collimating lens, that is, a position shorter than the focal length so that the light beam having the 790 nm wavelength in the form of a divergent beam is incident on the objective lens, the working distance can be secured and the spherical aberration due to the difference in thickness between the next generation DVD and the CD and the difference in wavelength therebetween can be corrected. Also, when a light beam having the 650 nm wavelength for the DVD in the form of a divergent beam is incident on the objective lens, spherical aberration due to the difference in thickness between the next generation DVD and the DVD and the difference in wavelength therebetween can be corrected.

However, when the divergent beam is used for the CD and/or DVD, although the correction of the spherical aberration and securing of the working distance are possible, the optical pickup becomes a finite optical system. Thus, when a shift of the objective lens in a radial direction of the optical disc is generated as in the case in which an eccentric optical disc is adopted, coma aberration is greatly generated so that the aberration characteristic is abruptly deteriorated. In particular, deterioration of a tracking signal and a reproduction signal becomes severe due to the coma aberration.

To solve the above and/or other problems, the present invention provides a compatible optical pickup so that a high density optical disc and a low density optical disc having different thicknesses can be compatibly adopted and a superior aberration characteristic can be obtained when an objective lens is shifted in a radial direction of the optical disc without additional optical elements.

According to the present invention there is provided an apparatus and method as set forth in the appended claims. Preferred features of the invention will be apparent from the dependent claims, and the description which follows.

According to one aspect of the present invention, there is provided a compatible optical pickup compatibly adopting a high density recording medium and at least one low density recording medium, the compatible optical pickup comprising: an objective lens capable of forming a light spot suitable for recording and/or reproduction on a recording surface of the high density recoding medium by focusing an incident light beam for the high density recording medium capable of obtaining a high NA suitable for the high density recording medium and a light spot suitable for recording and/or reproduction on a recording surface of the low density recoding medium by focusing an incident light beam for the low density recording medium in the form of a divergent beam; and an actuator provided to apply tilt to the objective lens, wherein the light beam for the low density recording medium is incident on the objective lens in the form of a divergent beam, and when the objective lens is shifted in a radial direction with respect to the low density recording medium, a tilt is applied to the objective lens corresponding to the shift.

Preferably, the amount of inclination of the objective lens as a tilt is applied is proportional to a translational movement of the objective lens in the radial direction.

Preferably, the amount of inclination of the objective lens as a tilt is applied is detected from current applied to a coil of the actuator to make the objective lens perform a translational movement in the radial direction.

Preferably, the tilt is a radial tilt.

The objective lens has an NA of 0.85 or more with respect to a blue-violet light beam and a thickness of 0.1 mm of a recoding medium.

The compatible optical pickup further comprises an NA adjusting member for adjusting an NA with respect to a light beam for the low density recording medium so that the light beam for the low density recording medium focused by the objective lens is a light beam having an effective NA suitable for the low density recording medium.

The high density recording medium is a recording medium in a next generation DVD family having a density higher than that of a DVD, and the low density recording medium is at least one of an optical disc in a CD family and an optical disc in a DVD family.

A light beam for the low density recording medium is at least one of a light beam having a red wavelength suitable for an optical disc in a DVD family and a light beam having a near infrared wavelength suitable for an optical disc in a CD family.

A photodetector for receiving and detecting a light beam for the low density recording medium reflected by the low density recording medium is divided into at least four sections in the radial direction of the recording medium and includes a pair of inner light receiving portions and a pair of outer light receiving portions.

The photodetector has a structure in which a base ball pattern portion of a light beam reflected and/or diffracted by the recording medium due to a periodic structure of the recording medium in a track direction is received only by the outer light receiving portions of the photodetector.

When one of subtracting signals between detection signals of the inner light receiving portions of the photodetector and between detection signals of the outer light receiving portions of the photodetector is PP1 and the other subtracting signal is PP2, a tracking error signal TES is detected according to the following equation,

$$TES = PP2 - \zeta \cdot PP1$$

wherein, $\zeta$ is a gain.

For a better understanding of the invention, and to show how embodiments of the same may be carried into effect, reference will now be made, by way of example, to the accompanying diagrammatic drawings in which:

Figure 1 is a view schematically showing the optical configuration of a compatible optical pickup according to a preferred embodiment of the present invention;

Figures 2A and 2B are views respectively showing the optical path and the aberration of the first light beam when the first light beam is focused by an objective lens formed according to the design data of Table 1 to form a light spot on a recording surface of the first optical disc, in the compatible optical pickup according to the present invention of Figure 1;

Figure 3A and 3B are views respectively showing the optical path and the aberration of the second light beam when the second light beam is focused by an objective lens formed according to the design data of Table 1 to form a light spot on a recording surface of the second optical disc, in the compatible optical pickup according to the present invention of Figure 1;

Figure 4A and 4B are views respectively showing the optical path and the aberration of the third light beam when the third light beam is focused by an objective lens formed according to the design data of Table 1 to form a light spot on a recording surface of the third optical disc, in the compatible optical pickup according to the present invention of Figure 1;

Figure 5 is a view schematically showing a preferred embodiment of an optical disc system adopting the compatible optical pickup according to the present invention;

Figure 6 is a view schematically showing another preferred embodiment of an NA adjusting member adopted in the compatible optical pickup according to the present invention;

Figure 7 is a view showing aberration generated when a second light beam having a 650 nm wavelength $\lambda 2$ is focused by an objective lens to form a light spot on the recording surface of a DVD when the objective lens is shifted by 0.4 mm during the reproduction of the DVD by using the compatible optical pickup according to the present invention;

Figure 8 is a view showing aberration generated when a third light beam having a 780 nm wavelength $\lambda 3$ is focused by an objective lens to form a light spot on the recording surface of a CD when the objective lens is shifted by 0.4 mm during the reproduction of the CD by using the compatible optical pickup according to the present invention;

Figure 9 is a view showing aberration generated when radial tilt is applied to an objective lens corresponding to the amount of shift of the objective lens during the shifting of the objective lens under the same conditions shown in Figure 7;

Figure 10 is a view showing aberration generated when radial tilt is applied to an objective lens corresponding to the amount of shift of the objective lens during the shifting of the objective lens under the same conditions shown in Figure 8;

Figure 11 is a view schematically showing a first preferred embodiment of a photodetector and a tracking error signal detection circuit which can be applied to the compatible optical pickup according to the present invention; and

Figure 12 is a view schematically showing a second preferred embodiment of the photodetector and the tracking error signal detection circuit which can be applied to the compatible optical pickup according to the present invention.

To compatibly adopt a high density optical disc and a low density optical disc having different thicknesses, a compatible optical pickup according to a preferred embodiment of the present invention includes a plurality of light sources for emitting light beams having wavelength suitable for the respective optical discs having different formats, a single objective lens, and an actuator capable of making the objective lens tilt in a radial direction of the optical disc. The compatible optical pickup according to the present invention has an optical arrangement such that a divergent beam can be incident on the objective lens with respect to an optical disc having a thickness deviated from optimal design conditions of the objective lens, and is operated to apply radial tilt to the objective lens to correspond to the shift of the objective lens when the objective lens is shifted in the radial direction of the objective lens.

According to the compatible optical pickup, since a divergent beam is used to an optical disc whose thickness is out of a range of the optimal design conditions of the objective lens, not only spherical aberration due to the difference in thickness between the optical discs can be corrected, but also a sufficient working distance so that the optical disc and the objective lens do not collide with each other can be secured. Also, when the objective lens is shifted in the radial direction, generation of aberration, in particular, coma aberration, is restricted so that superior tracking and reproduction signals can be detected.

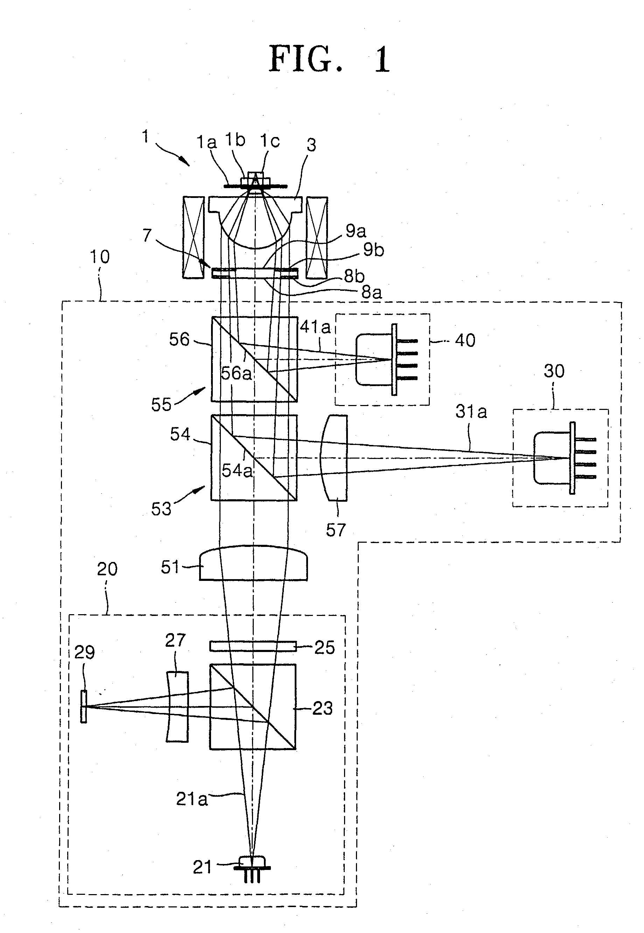

Figure 1 schematically shows the optical configuration of an optical pickup according to a preferred embodiment of the present invention.

Referring to the drawing, to compatibly adopt a plurality of optical discs 1a, 1b, and 1c having different thicknesses, a compatible optical pickup according to the present invention includes an optical unit 10 for emitting light beams having wavelengths suitable for the respective optical discs 1a, 1b, and 1c toward an optical discs 1 and receiving the light beams traveling back after being reflected by the optical disc 1 to detect an information reproduction signal and/or an error signal, an objective lens 3 for focusing an incident light beam to form a light spot on a recording surface of the optical disc 1, and an actuator 5 for making the objective lens 3 tilt in a radial direction of the optical disc 1.

In the present preferred embodiment of the present invention, the optical unit 10 includes first through third optical units 20, 30, and 40 for emitting first through third light beams 21a, 31a, and 41a having wavelengths suitable for the first through third optical discs 1a, 1b, and 1c having different thicknesses and receiving the first through third light beams 21a, 31a, and 41a traveling back after being reflected by the optical disc 1 to detect an information reproduction signal and/or an error signal, a first optical path changer 53 arranged between the first and second optical units 20 and 30 and the objective lens 3, a second optical path changer 55 arranged between the first optical path changer 53 and the objective lens 3, a first collimating lens 51 arranged between the first optical unit 20 and the first optical path changer 53, and a second collimating lens 57 arranged between the second optical unit 30 and the first optical path changer 53.

The first optical unit 20, as shown in Figure 1, includes a blue-violet light source 21 for emitting the first light beam 21a having a blue-violet wavelength, for example, a 405 nm wavelength, suitable for the first optical disc 1a, for example, a next generation DVD family optical disc (hereinafter, referred to as the next generation DVD) that has a high density than that of a DVD, a polarizing beam splitter 23 for transmitting or reflecting the incident first light beam 21a according to the polarization thereof, a quarter wave plate to the wavelength of the first light beam 21a for changing the polarization of the first light beam 21a, a photodetector 29 for detecting an information reproduction signal and/or an error signal by receiving the first light beam 21a traveling back after being reflected by the optical disc 1, and a sensing lens 27 arranged between the polarizing beam splitter 23 and the photodetector 29.

An astigmatism lens may be provided as the sensing lens 27 so that a focus error signal can be detected in an astigmatic method by generating astigmatism in the first light beam 21a.

A hologram optical module for a red wavelength, for example, a 650 nm wavelength, suitable for the second optical disc 1b, for example, a DVD family optical disc (hereinafter, referred to as the DVD), may be provided as the second optical unit 30. A hologram optical module for a near infrared wavelength, for example, a 780 nm wavelength, suitable for the third optical disc 1c, for example, a CD family optical disc (hereinafter, referred to as the CD), may be provided as the third optical unit 40.

As it is well known in the field of technology to which the present invention pertains, the hologram optical module includes a light source for emitting a light beam having a predetermined wavelength, for example, a 650 nm or 780 nm wavelength, a photodetector arranged at the side of the light source and receiving the light beam traveling back after being reflected by the optical disc 1 to detect an information reproduction and/or error signal, and a hologram element for transmitting most of the incident light beam output from the light source straight and diffracting the light beam traveling back after being reflected by the optical disc 1 into the +1st order or -1st order light beam to proceed toward the photodetector. The hologram optical module may further include a grating to detect a tracking error signal, for example, in a DPP (differential push-pull) method. When the grating is included, the photodetector of the hologram optical module has a structure so that it can detect a tracking error signal in the DPP method. Here, detailed descriptions and illustrations of the hologram optical module for a red wavelength for a DVD and the hologram optical module for a near infrared wavelength for a CD respectively adopted as the second and third optical units 30 and 40 will be omitted.

The second and third optical units 30 and 40 may have the optical structure in which the light source and the photodetector are separately provided as in the first optical unit 20, instead of having a structure of the hologram optical module. Also, a hologram optical module for a blue-violet wavelength, for example, a 405 nm wavelength, for the next generation DVD may be provided as the first optical unit 20.

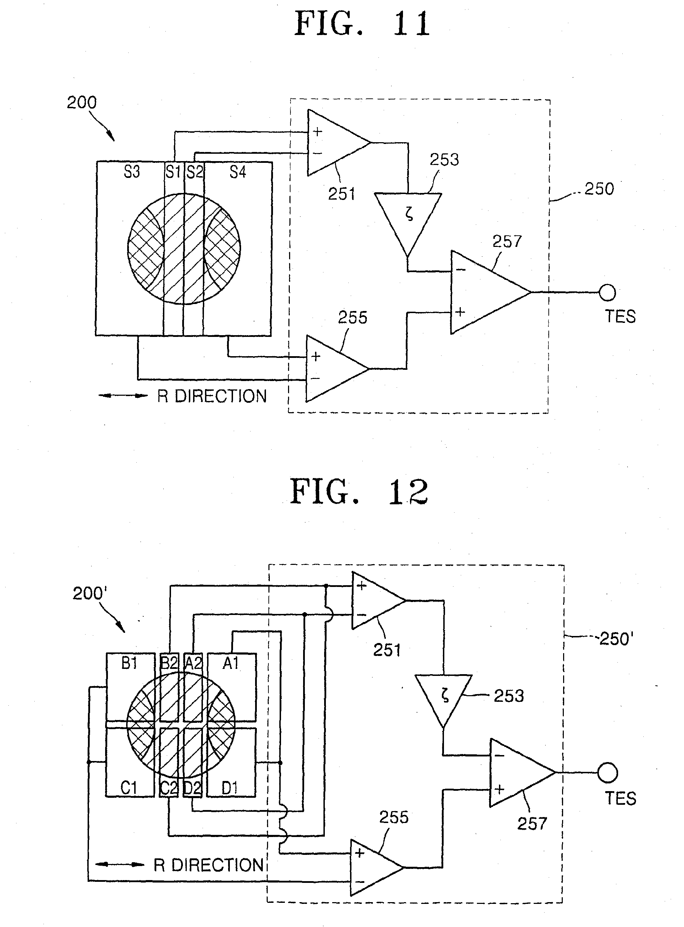

Preferably, the objective lens 3 is optimized to an optical disc having the highest density, for example, the first optical disc 1a, among the first through third optical discs 1a, 1b, and 1c. When the objective lens 3 is optimized to the first optical disc 1a, the second and third optical units 30 and 40 preferably includes a photodetector having at least a four-section structure in a direction (a direction R) corresponding to the radial direction of the optical disc, as shown in Figures 11 and 12 which will be described later, to detect a racking error signal in which a tracking error offset is minimized. Of course, the photodetector of the first optical unit 20 preferably has at least a four-section structure in the direction R, as shown in Figures 11 and 12.

The first optical path changer 53 is arranged between the first and second optical units 20 and 30 and the objective lens 3, and makes the first and second light beams 21a and 31a output from the first and second optical units 20 and 30 proceed toward the objective lens 3 and the first and second light beams 21a and 31a traveling back after being reflected by the optical disc 1 proceed toward the first and second optical units 20 and 30. A beam splitter 54 having a mirror surface 54a at which the first light beam 21a is transmitted while the second light beam 31a is totally reflected may be provided as the first optical path changer 53.

The second optical path changer 55 is arranged between the first optical path changer 53 and the objective lens 3, and transmits the first and second light beams 21a and 31a output from the first and second optical units 20 and 30 and reflects the third light beam 41a output form the third optical unit 40. A beam splitter 56 having a mirror surface 56a at which all or part of the first and second light beams 21a 31a are transmitted while all or part of the third light beam 41a is reflected may be provided as the second optical path changer 55.

The first collimating lens 51 is arranged between the first optical unit 20 and the first optical path changer 53, and changes the first light beam 21a output from the first optical unit 20 in the form of a divergent beam into a parallel beam to be incident on the objective lens 3.

When the first collimating lens 51 for changing the first light beam 21a into a parallel beam is provided, the objective lens 3 is designed to be optimized to the first light beam 21a that is a parallel beam. In the case in which the first collimating lens 51 is provided, the first light beam 21a is incident on the objective lens 3 in the form of a parallel beam, and the objective lens 3 is designed to be optimized to the first light beam 21a and the first optical disc 1a, superior reproduction and tracking error signals can be detected during the shifting of the objective lens 3 in the radial direction.

The second collimating lens 57 is arranged between the second optical unit 30 and the first optical path changer 53. The second collimating lens 57 is preferably provided to change the second light beam 31a output from the second optical unit 30 in the form of a divergent beam to a divergent beam close to a parallel beam. When the position of the light source of the second optical unit 30 is disposed at a position deviated from the focal point of the second collimating lens 57, that is, at the position shorter than a focal length, the second light beam 31a still diverges after passing through the second collimating lens 57 so that the second light beam 31a can be changed to a divergent beam close to a parallel beam. In this case, since the second light beam 31a is incident on the objective lens 3 in the form of a divergent beam close to a parallel beam, when the second optical disc 1b is adopted, generation of spherical aberration due to the difference in thickness between the first optical disc 1a and the second optical disc 1b and the difference in wavelength between the second light beam 31a and the first light beam 21a can be restricted.

In the meantime, as shown in Figure 1, since the third light beam 41a output from the third optical unit 40 is incident on the objective lens 3 in the form of a divergent beam, the light source of the third optical unit 40 and the objective lens 3 constitute a finite optical system. Thus, when the third optical disc 1c is adopted, not only generation of spherical aberration due to the difference in thickness between the first optical disc 1a and the third optical disc 1c and the difference in wavelength between the third light beam 41a and the first light beam 21a can be restricted, but also a sufficient working distance can be secured so that the third optical disc 1c and the objective lens 3 do not collide with each other.

Although Figure 1 shows that the second collimating lens 37 is included, it is possible to correct the spherical aberration even when the objective lens 3 and the second optical unit 30 only constitute a finite optical system without the second collimating lens 57. Also, a collimating lens (not shown) for changing the third light beam 41a to a divergent beam close to a parallel beam may be further provided between the third optical unit 40 and the second optical path changer 55.

Here, although Figure 1 shows a preferred embodiment of the optical configuration of the optical unit 10 of the compatible optical pickup according to the present invention, the optical unit 10 of the compatible optical pickup according to the present invention is not limited to the optical configuration of Figure 1. That is, the optical configuration of the optical unit 10 according to the present invention can be modified in a variety of ways within a range of the technical concept of the present invention.

In the meantime, as described above, the objective lens 3 is preferably optimized to the first optical disc 1a that is the highest density optical disc. Also, to compatibly adopt the second and third optical discs 1b and 1c, the objective lens 3 is preferably provided between the second and third optical discs 1b and 1c and the objective lens 3 with a sufficient working distance so that the second and third optical discs 1b and 1c and the objective lens 3 do not collide with each other when the second and third light beams 31a and 41a input in the form of divergent beams are focused to form light spots on the recording surfaces of the second and third optical discs 1b and 1c, respectively.

For example, when the first optical disc 1a has a thickness of 0.1 mm and is provided to achieve a desired recording capacity with respect to a blue-violet light beam having a 405 nm wavelength and an Na of 0.85 or more, the objective lens 3 is preferably has an NA of 0.85 or more to a thickness of 0,1 mm and a 405 nm wavelength. Of course, when the first collimating lens 51 is provided and the first light beam 21a in the form of a parallel beam is incident on the objective lens 3, the objective lens 3 is designed to the first light beam 21a in the form of a parallel beam.

When the objective lens 3 is optimized to the first optical disc 1a and provided to have a sufficient working distance when the second and third optical discs 1b and 1c are adopted, if the second and third light beams 31a and 41a are incident on the objective lens 3 in the form of a parallel beam, spherical aberration due to the difference in thickness with the first optical disc 1a may be generated in the second and third light beams 31a and 41a formed as light spots on the recording surfaces of the second and third light beams 31a and 41a by being focused by the objective lens 3. However, in the compatibly optical pickup according to the present invention, since the second and third light beams 31a and 41a output from the second and third optical units 30 and 40 are incident on the objective lens 3 in the form of divergent beams, the generation of spherical aberration due to the difference in thickness between the second and third optical discs 1b and 1c and the first optical disc 1a can be sufficiently restricted.

Table 1 shows a detailed design example of the objective lens 3 that can compatibly adopt the first through third optical discs 1a, 1b, and 1c having different thicknesses and can be adopted in the compatible optical pickup according to the present invention. Table 1 shows data of the objective lens 3 designed to the first light beam 21a input in the form of a parallel beam and the second and third light beams 31a and 41a input in the form of divergent beams, when the wavelengths of the first through third light beams 21a, 31a, and 41a are 405 nm, 650 nm, and 780 nm, respectively, the thicknesses of the first through third optical discs 1a, 1b, and 1c are 0.1 mm, 0.6 mm, and 1.2 mm, respectively, and the effective NA to the first through third light beams 21a, 31a, and 41a are 0.85, 0.60, and 0.45, respectively.

[Table 1]

| Surface | Radius of Curvature [mm] | Thickness/Interval [mm] | Material (Glass) |
|---|---|---|---|
| Object Surface | INFINITY | INFINITY<br>32.31958<br>20.99335 | |
| S1(STOP) | INFINITY | 0.000000 | |
| S2 (Aspheric Surface 1) | 1.562481 | 2.00000 | BacD5_HOYA |
| | K: -0.830781<br>A:0.115242E-01 B:0.174402E-02 C:0.432473E-04 D:0.207460E-03<br>E:-.512981E-04 F:0.100915E-04 G:0.000000E+00 H:0.000000E+00 J:0.000000E+00 | | |

[Table 1]   (continued)

| Surface | Radius of Curvature [mm] | Thickness/Interval [mm] | Material (Glass) |
|---|---|---|---|
| S3 (Aspheric Surface 2 | - 8.323786 | 0.000000 | |
| | K:-135.523964 | | |
| | A:0"241679E-01 B:-.488517E-02 C:0.442140E.03 D:-.129910E-04 | | |
| | E:0.000000E+00 F:0.000000E+00 G:0.000000E+00 H:0.000000E+00 J:0.000000E+00 | | |
| S4 | INFINITY | 1.15590 | |
| | | 1.09329 | |
| | | 0.84607 | |
| S5 | INFINITY | 0.100000 | 'CG' |
| | | 0.60000 | |
| | | 1.20000 | |
| Image Surface | INFINITY | 0.000000 | |

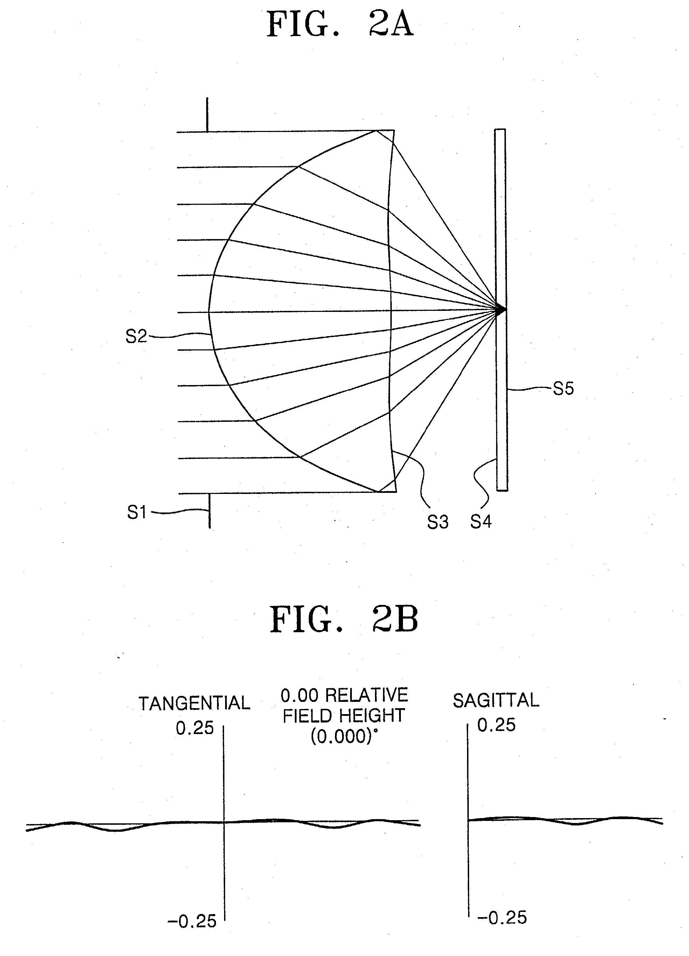

In Table 1, three values in each section of Thickness/Interval corresponding to Object Surface, S4, and S5 indicate in order intervals between Object Surface, S4, and S5 and the next surface or thicknesses thereof with respect to the first through third optical discs 1a, 1b, and 1c, respectively. BaCD5_HOYA is an optical medium forming the objective lens 3 and has refractive indices of 1.605256, 1.586422, and 1.582509 with respect to the wavelengths of 405 nm, 650 nm, and 780 nm, respectively. Also, 'CG' is an optical medium from light incident surfaces of the first through third optical discs 1a, 1b, and 1c to the recording surface and has refractive indices of 1.621462, 1.581922, and 1.575091 with respect to the wavelengths of 405 nm, 650 nm, and 780 nm, respectively. K denotes a conic constant of the aspheric surfaces 1 and 2 S2 and S3 that are lens surfaces of the objective lens 3. A, B, C, D, E, F, G, H, and J are aspheric coefficients. S1-S5 indicating surfaces in Table 1 are shown in Figures 2A through 4a for reference.

The formula of an aspheric surface to the first and second aspheric surfaces S2 and S3 can be expressed as in Mathematical Formula 3 below when the depth from the apex of the aspheric surface is z.

[Mathematical Formula 3]

$$z = \frac{ch^2}{1 + \sqrt{1 -(1 + K)c^2 h^2}} + Ah^4 + Bh^6 + Ch^8 + Dh^{10} + Eh^{12} + Fh^{14} + Gh^{16} + Hh^{18} + Jh^{20}$$

Here, h denotes a height from an optical axis, c denotes a curvature, K denotes a conic coefficient, and A-J denote aspheric coefficients.

The objective lens 3 having the design data of Table 1 has sufficient working distances of 1.15590 mm, 1.09329 mm, and 0.84607 mm with respect to the first through third optical discs 1a, 1b, and 1c having thicknesses of 0.1 mm, 0.6 mm, and 1.2 m, respectively, so that the objective lens 3 does not collide with the optical disc 1 when the second and third optical discs 1b and 1c having thicknesses deviated from the optimal design conditions of the objective lens 3, that is, a DVD and a CD, are adopted. Also, the objective lens 3 having the design data of Table 1 is designed to an incident light beam in the form of a divergent beam with respect to a light beam having a wavelength deviated from the optimal design conditions. Actually, since the second and third light beams 31a and 41a are incident on the objective lens 3 in the form of a divergent beam in the compatible optical pickup according to a preferred embodiment of the present invention, the objective lens 3 has a sufficiently low optical path difference (OPD) with respect to the second and third optical discs 1b and 1c.

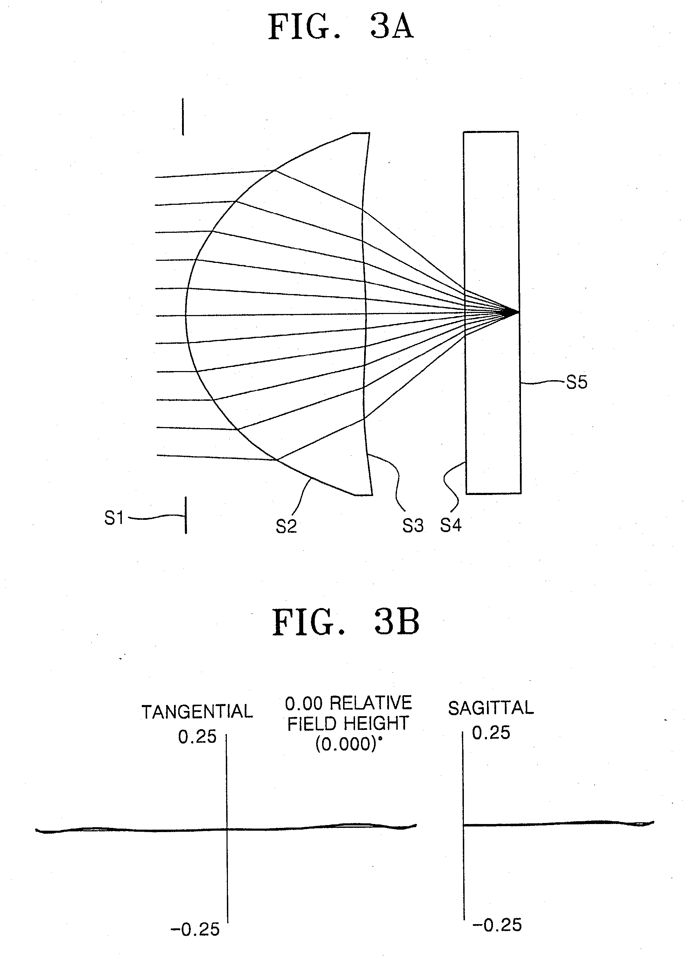

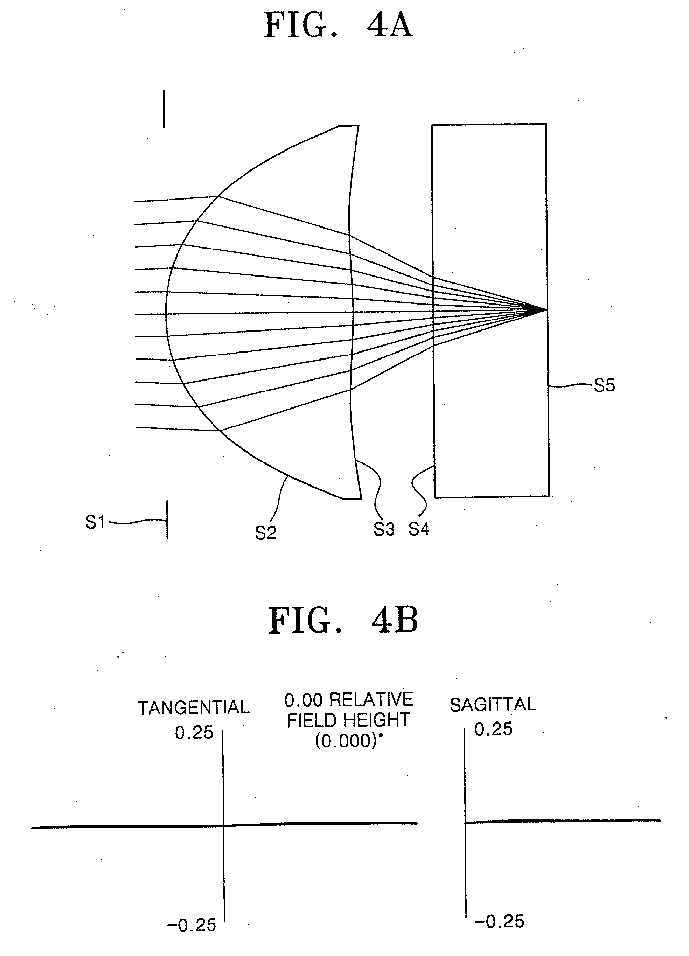

Figures 2A and 2B show the optical path and aberration of the first light beam 21a when a light spot is formed on the recording surface of the first optical disc 1a by focusing the first light beam 21a by using the objective lens 3 formed according to the design data of Table 1, respectively. Figures 3A and 3B show the optical path and aberration of the second light beam 31a when a light spot is formed on the recording surface of the second optical disc 1b by focusing the second light beam 31a by using the objective lens 3 formed according to the design data of Table 1, respectively. Figures 4A and 4B show the optical path and aberration of the third light beam 41a when a light spot is formed on the recording surface of the third optical disc 1c by focusing the third light beam 41a by using the objective lens 3 formed according to the design data of Table 1, respectively. Here, Figures 2B, 3B, and 4B show the OPDs with respect to the first light beam 21a having a 405 nm wavelength, the second light beam 31a having a 650 nm wavelength, and the third light beam 41a having a 780 nm wavelength, respectively.

As can be seen from Figures 2A and 2B, 3A and 3B, and 4A and 4B, the objective lens 3 formed according to the design data of Table 1 has a sufficiently low OPD when it focuses the first through third light beams 21a, 31a, and 41a and forms a light spot on the recording surface of the first through third optical discs 1a, 1b, and 1c.

Thus, the compatible optical pickup according to a preferred embodiment of the present invention adopting the objective lens 3 formed according to the design data of Table 1 can compatibly adopt the first through third optical discs 1a, 1b, and 1c.

The objective lens 3 is mounted on the actuator 5. In the compatible optical pickup according to the present invention, the actuator 5 is preferably capable of tilting the objective lens 3 in a radial direction of the optical disc 1. An actuator that can not only move the objective lens 3 in a focus direction and a tracking direction but also adjust the objective lens 3 in a radial tilt direction is provide as the actuator 5. Since the actuator 5 capable of adjusting the objective lens 3 in the focus direction, tracking direction, and radial tilt direction is a well-known technology in the field to which the present invention pertains, detailed descriptions of the structure and operation of the actuator 5 will be omitted.

When radial tilt is applied to the objective lens 3 by using the actuator 5 capable of tilting in the radial direction, the amount of inclination of the actuator 5, that is, the amount of inclination of the objective lens 3, is proportional to the translational motion of the objective lens 3 in the radial direction of the optical disc 1. Also, the amount of inclination of the objective lens 3 can be detected from the current applied to a coil of a tracking actuator portion of the actuator 5 to make the objective lens 3 perform a translational motion in the radial direction.

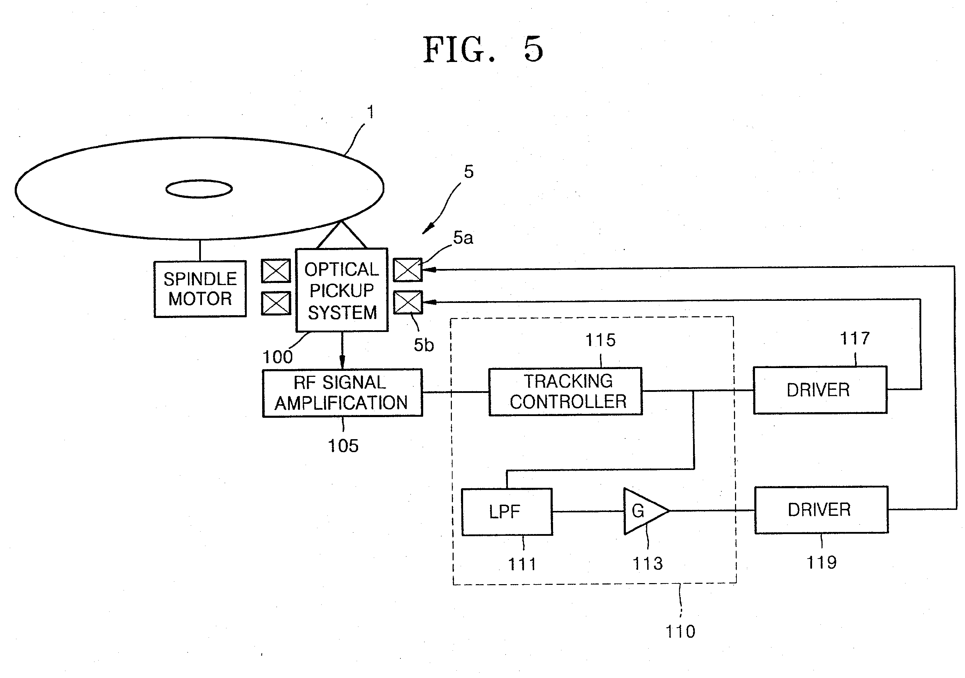

That is, an optical disc system adopting the compatible optical pickup according to the present invention may have the structure as shown in Figure 5 and can control the movement of the objective lens 3 as follows. As can be seen from Figure 5, in the optical disc system adopting the compatible optical pickup according to the present invention, the actuator 5 preferably includes a tilt actuator portion 5a for the control of radial tilting and a tracking actuator portion 5b for the control of tracking. Of course, the actuator 5 preferably includes a focus actuator portion (not shown) for the control of focusing. Here, actuators having a variety of structures capable of applying radial tilt to the objective lens 3 that are well known in the present technical field can be used as the actuator 5 in the compatible optical pickup according to the present invention.

Referring to Figure 5, a tracking error signal TES is detected by using a compatible optical pickup optical system 100 according to the present invention. A tracking driving signal TRD is obtained by calculating the TES and the tracking actuator portion 5b and the tilt actuator portion 5a are driven by using the tracking driving signal. In Figure 5, reference numeral 110 denotes a servo circuit, reference numeral 111 denotes a low pass filter, and reference numeral 113 denotes a gain adjuster. Reference numeral 105 denotes an RF signal amplifier for amplifying a signal output from the photodetectors of the optical units 20, 30, and 40 of the compatible optical pickup optical system 100 according to the present invention. Reference numeral 115 denotes a tracking controller and reference numerals 117 and 119 are drivers for driving the tracking actuator portion 5b and the tilt actuator portion 5a, respectively. Here, since the signal processing circuit structure and signal processing process of Figure 5 can not only be well known in the present technical field but also be analogized, detailed descriptions thereof will be omitted.

As can be seen from Figure 5, since a tracking driving signal TRD is used for driving both the tracking actuator portion 5b and the tilt actuator portion 5a, the amount of inclination of the objective lens 3 is proportional to a translational motion of the objective lens 3 in the radial direction of the optical disc 1. The amount of tilting of the objective lens 3 can be detected from the current applied to a coil of the tracking actuator portion 5b to make the objective lens 3 perform a translational motion in the radial direction of the optical disc 1.

In the meantime, referring back to Figure 1, since the objective lens 3 is provided to be suitable for a high density optical disc needing the greatest NA, preferably, the compatible optical pickup according to the present invention further includes an NA adjusting member 7 for adjusting an effective NA with respect to the light beam having a wavelength deviated from the optimal design conditions of the objective lens 3 for a relatively low density optical disc.

The NA adjusting member 7 includes a central transmission area transmitting an incident light beam for a high density optical disc and a low density optical disc and having a diameter corresponding to an effect NA suitable for at least one low density optical disc and an NA adjustment area, disposed outside the central transmission area to block a light beam for a low density optical disc that is an NA limit object.

For example, as shown in Figure 1, when the compatible optical pickup according to the present invention compatibly adopt the first through third optical discs 1a, 1b, and 1c and the objective lens 3 is provided to be suitable for the first optical disc 1a, the NA adjusting member 7 has a structure to adjust NA of the second and third light beams 31a and 41a so that the second and third light beams 31a and 41a focused by the objective lens 3 have effective NAs suitable for the second and third optical discs 1 and 1c.

As a detailed example, the NA adjusting member 7 includes a first central transmission area 8a having a diameter corresponding to an effective NA suitable for the second optical disc 1b to make the effective NA of the second light beam 31a to be 0.6 and a second central transmission area 9a having a diameter corresponding to an effective NA suitable for the third optical disc 1c to make the effective NA of the third light beam 41a to be 0.45.

A first NA adjustment area 8b around the first central transmission area 8a is formed of a hologram or a wavelength selective filter to block the second light beam 31a for the second optical disc 1b, that is an NA limit object, and transmit the first light beam 21a. Also, a second NA adjustment area 9b around the second central transmission area 9a is formed of a hologram or a wavelength selective filter to block the third light beam 41a for the third optical disc 1c, that is an NA limit object, and transmit the first and second light beams 21a ad 31a.

Here, since it is preferable to match the centers of the first and second central transmission areas 8a and 9a with the center of the objective lens 3, the NA adjusting member 7 is preferably mounted on the actuator 5 together with the objective lens 3.

Although in Figure 1 the NA adjusting member 7 is provided as a separate member from the objective lens 3, it can be integrally formed with the objective lens 3. For example, the first central transmission area 8a and the first NA adjustment area 8b of the NA adjusting member 7 can be formed on one lens surface facing the optical unit 10 of the objective lens 3, whereas the second central transmission area 9a and the second NA adjustment area 9b of the NA adjusting member 7 can be formed on the other lens surface of the objective lens 3.

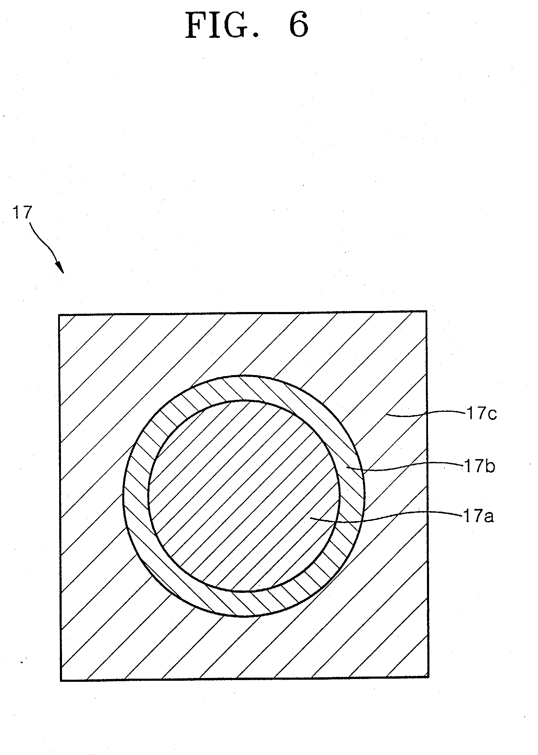

The compatible optical pickup according to the present invention may include an NA adjusting member 17 as shown in Figure 6 instead of the NA adjusting member 7. The NA adjusting member 17 includes a first central transmission area 17a for transmitting all the wavelengths of the first through third light beams 21a, 31a, and 41a, a first NA adjustment area 17b for transmitting only the wavelengths of the first and second light beams 21a and 31a (light beams in blue-violet and red wavelength), and a second NA adjustment area 17c for transmitting only the wavelength of the first light beam 21a (a light beam in a blue-violet wavelength). Here, the diameter of the first central transmission area 17a (the inner diameter of the first NA adjustment area 17b) preferably has a size corresponding to an effective NA, for example, 0.45, suitable for the third optical disc 1c while the diameter of the first NA adjustment area 17b (the inner diameter of the second NA adjustment area 17c) preferably has a size corresponding to an effective NA, for example, 0.6, suitable for the second optical disc 1b.

The NA adjusting member 17 can be formed by coating one lens surface of the objective lens 3 or an additional transparent plate. Here, the coating is performed such that no phase difference is generated between the first central transmission area and the first and second NA adjustment areas 17a, 17b, and 17c. That is, the coating is performed such that the phase change would be identical when the first light beam 21a passes through each of the first central transmission area and the first and second NA adjustment areas 17a, 17b, and 17c.

In the compatible optical pickup according to a preferred embodiment of the present invention having the above structure, as follows, when the first optical disc 1a having a thickness corresponding to the optimal design conditions of the objective lens 3 is adopted, superior reproduction and tracking error signals can be detected and when the second and third optical discs 1b and 1c having thicknesses deviated from the optimal design conditions of the objective lens 3 are adopted, a sufficient working distance can be secured and, since the generation of spherical aberration and coma aberration are restricted, superior reproduction and tracking error signals can be detected.

When the first optical disc 1a is adopted, the light source 21 of the first optical unit 20 is operated to emit the first light beam 21a. When the objective lens 3 is designed to be optimal to the wavelength the first light beam 21a and the thickness of the first optical disc 1a, spherical aberration is hardly generated when a light spot is formed on the recording surface of the first optical disc 1a by focusing the first light beam 21a emitted from the first optical unit 20 by the objective lens 3. Also, coma aberration is hardly generated when the objective lens 3 is shifted in the radial direction of the first optical disc 1a. Thus, very superior tracking and reproduction signals can be detected.

When the second and third optical discs 1b and 1c are adopted, the light sources of the second and third optical units 30 and 40 are operated to emit the second and third light beams 31a and 41a. Since the second and third light beams 31a and 41a are incident on the objective lens 3 as a divergent beam, spherical aberration due to the difference in thickness between the second and third optical discs 1b and 1c and the first optical disc 1a and the difference in wavelength between the second and third light beams 31a and 41a and the first light beam 21a can be sufficiently corrected. Also, as can be seen from the design example of the objective lens of Table 1, a sufficient working distance can be obtained. Also, as described below, according to the compatible optical pickup according to a preferred embodiment of the present invention, when the second and third optical discs 1b and 1c deviated from the optimal design conditions of the objective lens 3 are adopted, the generation of coma aberration due to the shift of the objective lens 3 in the radial direction can be sufficiently restricted. Thus, when the second and this optical discs 1b and 1c are adopted, superior reproduction and tracking error signals can be detected.

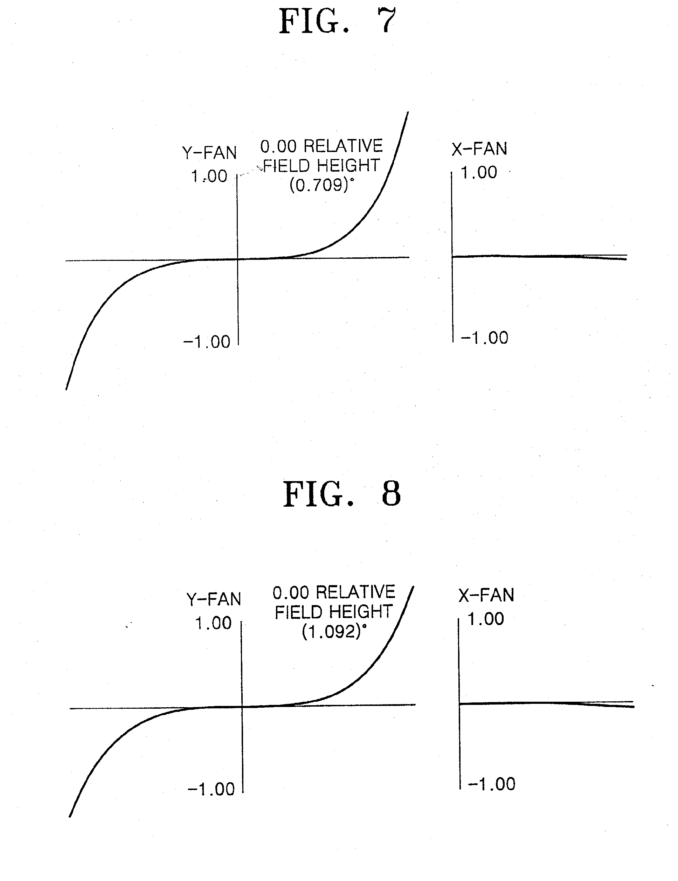

Referring to Figures 7 through 10 and Table 2, in the compatible optical pickup according to a preferred embodiment of the present invention, the detection of superior reproduction and tracking error signal by restricting the generation of coma aberration due to the shift of the objective lens 3 in the radial direction when the second and third optical disc 1 deviated from the optimal design conditions of the objective lens 3 are adopted is reproduced will now be described.

Since the second and third light beams 31a and 41a are incident on the objective lens 3 in the form of a divergent light, as described above, coma aberration is generated when the objective lens 3 is shifted in the radial direction as in the reproduction of the eccentric optical disk 1. Figures 7 and 8 show the aberration when a light spot is formed on the recording surface of a DVD and a CD by focusing the second light beam 31a having a 650 nm wavelength $\lambda 2$ and a third light beam 41a having a 780 nm wavelength $\lambda 3$ by the objective lens 3 when the objective lens 3 is shifted by 0.4 mm during the reproduction of the DVD and CD.

As can be seen from Figures 7 and 8, since the second and third light beams 31a and 41a are incident on the objective lens 3 in the form of a divergent beam, during the shift of the objective lens 3, optical aberration, in particular, coma aberration, is generated greatly. When the objective lens 3 is shifted by 0.4 mm in the radial direction, as shown in Table 2, optical aberration (OPDrms) is generated as much as 0.201 $\lambda 2$ with respect to a DVD and optical aberration (OPDrms) is generated as much as 0.167 $\lambda 3$ with respect to a CD.

[Table 2]

|  | Objective lens shift/Objective lens radial tilt | OPDrms |
|---|---|---|
| DVD | 0.0 mm/0° | 0.005 $\lambda 2$ |
|  | 0.4nnm/0° | 0.201 $\lambda 2$ |
|  | 0.4 mm/1.2° | 0.011 $\lambda 2$ |
| CD | 0.0 mm/0° | 0.001 $\lambda 3$ |
|  | 0.4 mm/0° | 0.167 $\lambda 3$ |
|  | 0.4 mm/2.0° | 0.012 $\lambda 3$ |

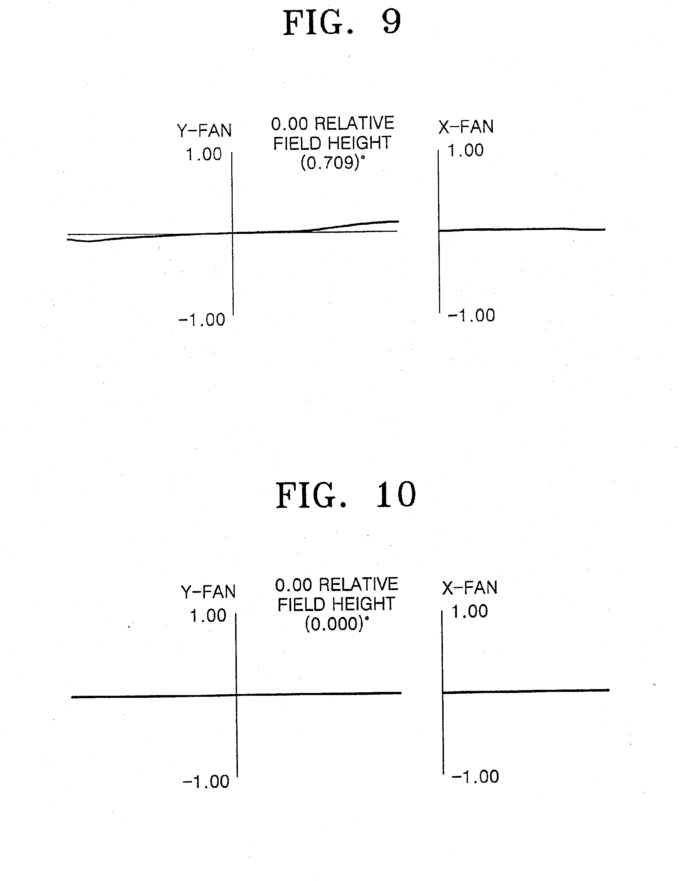

However, when a radial tilt is applied to the objective lens 3 corresponding to the amount of the shift of the objective lens 3 during the shift of the objective lens 3, as can be seen from Figures 9 and 10, the generation of optical aberration, in particular, coma aberration, due to the shift of the objective lens 3 is much restricted so that optical aberration is hardly generated. This is confirmed by Table 2. As shown in Table 2, when a radial tilt of 1.2° is applied to the objective lens 3 that is shifted by 0.4 mm with respect to a DVD, optical aberration OPDrms is reduced to 0.011 $\lambda 2$. When a radial tilt of 2.0° is applied to the objective lens 3 that is shifted by 0.4 mm with respect to a CD, optical aberration OPDrms is reduced to 0.012 $\lambda 3$.

Thus, according to the compatible optical pickup according to the present invention, when the optical disc having a thickness deviated from the optimal design conditions of the objective lens 3 is adopted, the generation of coma aberration can be restricted during the shift of the objective lens 3 so that superior tracking error and reproduction signals can be detected.

The detection of a tracking error signal by which a tracking error signal offset due to the shift of the objective lens 3 in the radial direction can be removed when the optical disc 1 having a format deviated from the optimal design conditions of the objective lens 3, for example, the second and/or third optical discs 1b and 1c are adopted, will now be described below.

As it is well known in the file of the present technology, although a push-pull method can be used for the detection of a tracking error signal with respect to a recordable optical disc, since a tracking error signal offset is generated by the shift of the objective lens 3 in the radial direction, a differential push pull (DPP) method is generally used to correct the tracking error signal offset.

In the compatible optical pickup, when a divergent beam is used for an optical disc having a thickness deviated from the optimal design conditions of the objective lens 3, a tracking error signal detection technology as shown in Figures 11 and 12 is further preferably adopted.

Referring to Figure 11, in the compatible optical pickup according to the present invention, when the optical disc 1 having a format deviated from the optimal design conditions, that is, the second and third optical discs 1b and 1c, is adopted, a photodetector 200 for detecting an information signal and/or error signal by receiving the light beam reflected by the recording surface of the optical disc 1 preferably has a structure having at least four sections divided in a direction corresponding to the radial direction of the optical disc 1. Here, the photodetector 200 may be photodetectors of the second and third optical units 30 and 40. When the first optical disc 1a is adopted, if a tracking error signal detection technology described with reference to Figure 11 is applied, the photodetector 200 may be the photodetector 29 of the first optical unit 20.

Here, the photodetector 200 preferably has a structure sectioned such that a base ball pattern portion of a light beam reflected and/or diffracted by the optical disc 1 due to a periodic structure in a track direction of the optical disc 1 is received only by outer section regions S3 and S4 of the photodetector 200. In the case of Figure 11, the base ball pattern portion means a portion where the $0^{th}$ order diffractive light and the $+1^{st}$ order diffractive light of the light reflected/diffracted by the optical disk 1 are overlapped and a portion where the $0^{th}$ order diffractive light and the $-1^{st}$ order diffractive light of the light reflected/diffracted by the optical disk 1 are overlapped.

A tracking error signal detection circuit 250 includes a first subtracter 251 for obtaining a subtracting signal between detection signals of inner section regions S1 and S4 of four section regions of the photodetector 200, a second subtracter 255 for obtaining a subtracting signal between detection signals of the outer section regions S3 and S4, a gain adjuster 253 for applying a predetermined gain $\xi$ to a signal output from the first subtracter 251, and a third subtracter 257 for obtaining a subtracting signal between a signal output from the gain adjuster 253 and a signal output from the second subtracter 255.

When a signal corresponding to the difference between the detection signals of the inner section regions S1 and S2 is PPin and a signal corresponding to the difference between the detection signals of the outer section regions S3 and S4 is PPout, a tracking error signal TES can be detected as in Mathematic Formula 4.

[Mathematic Formula 4]

$$TES = PPout - \zeta \cdot PPin$$

Here, $\zeta$ is a gain.

In the above description and illustration with reference to Figure 11, a predetermined gain $\xi$ is applied to a subtracting signal between the detection signals of the inner section regions S1 and S2. However, it is possible to apply a gain to a subtracting signal between the detection signals of the outer section regions S3 and S4, instead of applying a gain to a difference signal between the detection signals of the inner section regions S1 and S2, or an appropriate gain to each of the subtracting signal between the inner section regions S1 and S2 and the subtracting signal between the detection signals of the outer section regions S3 and S4.

Also, although the photodetector 200 is described and illustrated to be divided into four sections in a direction corresponding to the radial direction of the optical disc 1 in Figure 11, the photodetector 200, for example, as shown in Figure 12, may have an eight-section structure by being divided into four sections in a direction corresponding to the radial direction of the optical disc 1 and into two sections in a direction corresponding to the tangential direction of the optical-disc 1, or the photodetector 200 may have a sixteen-section structure. Here, as shown in Figure 12, a tracking error signal detection circuit 250' is modified considering the section structure of a photodetector 200', but is actually the same as the tracking error signal detection circuit 250 shown in Figure 11.

In the meantime, in the compatible optical pickup according to the present invention, a tracking error signal detection technology in the DPP method or the tracking error signal detection technology as shown in Figures 11 and 12 can be applied to the first optical disc 1a having the format satisfying the optimal design conditions of the objective lens 3.

In the above description, the compatible optical pickup according to the present invention is described and illustrated to include the three optical unit 10 for emitting light beams having different wavelengths to compatible adopt the next generation DVD, DVD, and CD. However, the present invention is not limited thereto and a variety of preferred embodiments of the compatible optical pickup are available.

According to the above-described present invention, a high density optical disc and a low density optical disc having different thicknesses can be compatibly adopted. Also, a superior aberration characteristic can be obtained without additional optical parts with respect to the low density optical disc when the objective lens is shifted in the radial direction of the optical disc.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings) and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment (5). The invention extends to any

**EP 1 369 853 A2**

novel one, or any novel combination, of the features disclosed in this specification (including any accompanying claims, abstract and drawings), or to any novel one, or any novel combination, of the steps of any method or process so disclosed.

**Claims**

1. A compatible optical pickup compatibly adopting a high density recording medium and at least one low density recording medium, the compatible optical pickup comprising:

   an objective lens (3) capable of forming a light spot suitable for recording and/or reproduction on a recording surface of the high density recoding medium by focusing an incident light beam for the high density recording medium capable of obtaining a high NA suitable for the high density recording medium and a light spot suitable for recording and/or reproduction on a recording surface of the low density recoding medium by focusing an incident light beam for the low density recording medium in the form of a divergent beam; and

   an actuator (5) provided to apply tilt to the objective lens (3), wherein the light beam for the low density recording medium is incident on the objective lens (3) in the form of a divergent beam, and when the objective lens (3) is shifted in a radial direction with respect to the low density recording medium, a tilt is applied to the objective lens (3) corresponding to the shift.

2. The compatible optical pickup as claimed in claim 1, wherein the amount of inclination of the objective lens (3) as a tilt is applied is proportional to a translational movement of the objective lens (3) in the radial direction.

3. The compatible optical pickup as claimed in claim 2, wherein the amount of inclination of the objective lens (3) as a tilt is applied is detected from current applied to a coil of the actuator (5) to make the objective lens (3) perform a translational movement in the radial direction.

4. The compatible optical pickup as claimed in any of claims 1 through 3, wherein the tilt is a radial tilt.

5. The compatible optical pickup as claimed in any preceding claim, wherein the objective lens (3) has an NA of 0.85 or more with respect to a blue-violet light beam and a thickness of 0.1 mm of a recoding medium.

6. The compatible optical pickup as claimed in claim 1, further comprising an NA adjusting member (7) for adjusting an NA with respect to a light beam for the low density recording medium so that the light beam for the low density recording medium focused by the objective lens (3) is a light beam having an effective NA suitable for the low density recording medium.

7. The compatible optical pickup as claimed in claim 6, wherein the NA adjusting member (7) comprises:

   a central transmission area for transmitting an incident light beam for a high density recording medium and an incident light beam for the low density recording medium and having a diameter corresponding to an effective NA suitable for at least one low density recording medium; and
   an NA adjustment area disposed outside the central transmission area for blocking a light beam for the low density recording medium that is an NA limit object.

8. The compatible optical pickup as claimed in claim 7, wherein the at least one low density recording medium includes a first low density recording medium having a relatively lower density and a second low density recording medium having a relatively higher density, and the NA adjusting member (7) comprises:

   a first central transmission area (8a) having a diameter corresponding to an effective NA suitable for the first low density recording medium;

   a first NA adjustment area (8b) disposed outside the first central transmission area (8a) for blocking a light beam for the first low density recording medium that is an NA limit object;

   a second central transmission area (9a) having a diameter corresponding to an effective NA suitable for the second low density recording medium; and

13

a second NA adjustment area (9b) disposed outside the second central transmission area (9a) for blocking a light beam for the second low density recording medium that is an NA limit object.

9. The compatible optical pickup as claimed in claim 7, wherein the at least one low density recording medium includes a first low density recording medium having a relatively lower density and a second low density recording medium having a relatively higher density, and the NA adjusting member (7) comprises:

a first central transmission area (17a) having a diameter corresponding to an effective NA suitable for the first low density recording medium;

a first NA adjustment area (17b) disposed outside the first central transmission area (17a) and having an outer diameter corresponding to an effective NA suitable for the second low density recording medium, for blocking a light beam for the first low density recording medium and transmitting a light beam for the second low density recording medium and a light beam for the high density recording medium; and

a second NA adjustment area (17c) disposed outside the first NA adjustment area (17b) for blocking a light beam for the second low density recording medium and for transmitting a light beam for the high density recording medium.

10. The compatible optical pickup as claimed in any preceding claim, wherein the high density recording medium is a recording medium in a next generation DVD family having a density higher than that of a DVD, and the low density recording medium is at least one of an optical disc in a CD family and an optical disc in a DVD family.

11. The compatible optical pickup as claimed in claim 10, wherein a light beam for the low density recording medium is at least one of a light beam having a red wavelength suitable for an optical disc in a DVD family and a light beam having a near infrared wavelength suitable for an optical disc in a CD family.

12. The compatible optical pickup as claimed in any preceding claim, wherein a photodetector (200) for receiving and detecting a light beam for the low density recording medium reflected by the low density recording medium is divided into at least four sections in the radial direction of the recording medium and includes a pair of inner light receiving portions and a pair of outer light receiving portions.

13. The compatible optical pickup as claimed in claim 12, wherein the photodetector has a structure in which a base ball pattern portion of a light beam reflected and/or diffracted by the recording medium due to a periodic structure of the recording medium in a track direction is received only by the outer light receiving portions of the photodetector.

14. The compatible optical pickup as claimed in either claim 12 or claim 13, wherein, when one of subtracting signals between detection signals of the inner light receiving portions of the photodetector and between detection signals of the outer light receiving portions of the photodetector is PP1 and the other subtracting signal is PP2, a tracking error signal TES is detected according to the following equation,

$$TES = PP2 - \zeta \cdot PP1$$

wherein, $\zeta$ is a gain.

# FIG. 1

# FIG. 2A

# FIG. 2B

TANGENTIAL  0.00 RELATIVE  SAGITTAL
FIELD HEIGHT
(0.000)°

0.25     0.25

−0.25     −0.25

# FIG. 3A

S5

S1

S2 S3 S4

# FIG. 3B

TANGENTIAL 0.00 RELATIVE SAGITTAL
FIELD HEIGHT
0.25 (0.000)° 0.25

-0.25 -0.25

# FIG. 4A

# FIG. 4B

FIG. 5

# FIG. 6

17

17c

17b

17a

# FIG. 7

Y-FAN
0.00 RELATIVE
FIELD HEIGHT
(0.709)°
1.00

-1.00

X-FAN
1.00

-1.00

# FIG. 8

Y-FAN
0.00 RELATIVE
FIELD HEIGHT
(1.092)°
1.00

-1.00

X-FAN
1.00

-1.00

# FIG. 9

Y-FAN
1.00
-1.00

0.00 RELATIVE
FIELD HEIGHT
(0.709)°

X-FAN
1.00
-1.00

# FIG. 10

Y-FAN
1.00
-1.00

0.00 RELATIVE
FIELD HEIGHT
(0.000)°

X-FAN
1.00
-1.00

# FIG. 11

# FIG. 12